# EUROPÄISCHE PATENTANMELDUNG

(11) **EP 0 604 826 A1**
(43) Veröffentlichungstag der Anmeldung: **06.07.1994**
(21) Anmeldenummer: 93120170.1
(22) Anmeldetag: 15.12.1993
(51) Int. Cl.: C10L 5/48, C10B 7/00

(54) **Anlage und Verfahren zur Verwertung brennbarer Stoffe, insbesondere Industrieabfälle und Hausmüll**

(30) Priorität: 24.12.1992 EP 92122005
(71) Anmelder: BALATON HOLDING SA, L-1660 Luxembourg (LU)
(72) Erfinder: Jeney, Peter, CH-6300 Zug (CH); Christen, Ernst, CH-5726 Unterkulm (CH)
(74) Vertreter: Blum, Rudolf Emil Ernst

(57) **Zusammenfassung**

Eine Vergasungs- resp. Verbrennungsanlage wird beschrieben mittels derer eine Gasmischung erzeugt wird, die zur schadstoffarmen Energiegewinnung in einem Energie-Generator geeignet ist. Ferner wird ein Verfahren beschrieben, das speziell zur Herstellung von Brennstoff-Briketts aus brennbaren Industrieabfällen geeignet ist, sowie ein Brennstoff mit speziell gutem Heizwert.

## Beschreibung

Die Erfindung betrifft eine Anlage zur Verwertung brennbarer Stoffe insbesondere eine Anlage zur Entsorgung brennbarer Industrieabfälle unter Energiegewinnung sowie ein Verfahren zur Ueberführung brennbarer Stoffe in eine für dieses Verfahren geeignete Form, insbesondere in Briketts mit definiertem Heizwert.

Verbrennungsanlagen für Müll unter gleichzeitiger Energieerzeugung sind bekannt. Der Betrieb solcher Anlagen mit Industrieabfällen, insbesondere solchen, die unter Sondermüll fallen, ist jedoch problematisch, da Sondermüll des öfteren halogenhaltige Produkte enthält, welche zur Beschädigung der Verbrennungsanlage führen können. Ferner erfordert die sichere Verbrennung von Sondermüll gleichmässige Verbrennungstemperaturen, welche nur schwierig einhaltbar sind, da die Zugabe von verschiedenen Abfallstoffen mit unterschiedlichen Heizwerten zu unerwünschten Temperaturabfällen führt. Dieses Problem wird heute meistens dadurch gelöst, dass grössere Mengen von zusätzlichen Energieträgern für die Verbrennung eingesetzt werden. Die beim Verbrennen von Sondermüll entstehenden gefährlichen Stoffe, beispielsweise Dioxine und Dibenzofurane stellen ebenfalls ein Problem dar, welches nur dadurch gelöst werden kann, dass permanent Verbrennungstemperaturen von über 1260°C eingehalten werden.

Ferner neigen die meisten Brennstoffe dazu, während der Verbrennung oder Vergasung eine dichte Oberflächenschicht auszubilden, die eine vollständige Verbrennung resp. Vergasung behindert oder gar verhindert.

Ein weiteres Problem besteht bei der Zwischen- oder Endlagerung von toxischen, insbesondere flüssigen, aber auch festen Abfällen, welche kostenaufwendige Sicherheitsvorkehrungen erfordern. Zudem wird es heute immer schwieriger neue Standorte, sowohl für Sondermülldeponien als auch für Sondermüllverbrennungsanlagen zu finden, resp. die bereits bestehenden Anlagen zu betreiben.

Ferner stellt auch der Transport, insbesondere flüssiger toxischer Industrieabfälle, ein generelles, allgemein bekanntes Problem dar.

Aufgabe der vorliegenden Erfindung ist es nun, eine Anlage bereitzustellen, die die vollständigere, schadstoffarme bis schadstoffreie Verbrennung resp. Vergasung fester Brennstoffe, vorzugsweise bei hohen Temperaturen und unter Energiegewinnung, ermöglicht sowie die Bereitstellung eines Verfahrens zur Herstellung eines festen Brennstoffes mit definiertem Heizwert aus flüssigen und festen, mindestens teilweise brennbaren Abfällen.

Die Aufgabe wird durch die Bereitstellung eines Doppelkuppelreaktors mit einem Brennraum zwischen einer festen äusseren und einer drehbaren innerne Kuppel gelöst, insbesonders in Kombination mit einer Katalysestation zur Bereitstellung eines die Vergasung fördernden Gasgemisches.

Die Erfindung wird in der Folge unter Bezugnahme auf die Figuren näher beschrieben.

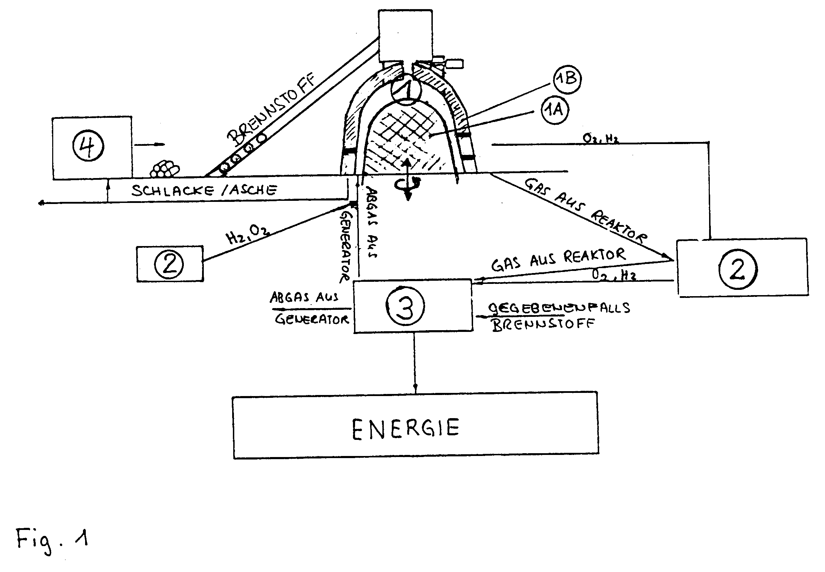

Figur 1 stellt eine Vergasungs- resp. Verbrennungsanlage mit geschlossenem Kreislauf und Energiegewinnung dar,
Figur 2 zeigt im Detail eine Katalysestation 2, und
Figur 3 zeigt im Detail eine Anlage 4 zur Herstellung von Brennstoff-Briketts mit definiertem Heizwert, insbesondere aus brennbaren Industrieabfällen oder Hausmüll.

Die Bezugszeichen in den Figuren bedeuten:
1 Vergasungs- resp. Verbrennungsreaktor
1A innere Kuppel
1B äussere Kuppel
2 Katalysestation
3 Energie-Generator
4 Brikettierungs-Anlage resp. Brennstoff-Lager oder Anlieferung
5 Flüssigkeitsabscheider
6 Behälter zur Erzeugung des Wasserstoff/Sauerstoffgemisches, explosionsgeschützt
7 Wiederaufbereitung der Fällung
8 Regelventil/Dosiergerät
9 Lanthanidenlösung
10 Fällung
11 Wärmeaustauscher
12 Wärmequelle, z.B. Gas aus Reaktor 1
13 Leitung zur Wiederaufbereitung
14 Pumpe
15 Zufuhr des Wasserstoff/Sauerstoff-Gasgemisches zur Verbrennungsanlage
16 Zerkleinern des kalorienhaltigen Feststoffabfalles
17 Lagertanks für kalorienhaltigen Flüssigabfall
18 Zugabe der Reaktionsmittel (Steuerchemikalien)
19 Zugabe des verbrennungsfördernden Mittels
20 Mischtank
21 Zufuhr des zerkleinerten Feststoffabfalles
22 Zugabe der Metalle (Cu,Zn,Mn) resp. deren Salze und/oder der Silikate
22A Zugabe des verfestigenden Mittels
23 Misch- und Reaktionstank
23A Radioaktive Bestrahlung
24 Druckpumpe oder Presse
25 Zufuhr des homogenen Brennstoffes in die Verbrennungsanlage direkt oder
25A Zufuhr des homogenen Brennstoffs zum Lager.

Der Vergasungsraum liegt zwischen den zwei Kuppeln und muss mindestens mit einer Brennstoff- und mit mindestens einer Gaszuführung sowie mit mindestens einer Gasabführung ausgestattet sein.

Die Kuppeln 1A, 1B des Reaktors 1 bestehen aus einem hochtemperaturbeständigen Material. Die Anforderungen an das Kuppelmaterial werden bestimmt durch das Brenngut resp. die damit zu erzielende Temperatur. Für die schadstoffarme oder -freie Verbrennung oder Vergasung von Industrieabfällen, insbesondere toxischen Industrieabfällen, sind hohe Temperaturen notwendig, üblicherweise mind. ca. 1260°C, vorzugsweise mind. 1500 bis über 2000°C. Für diese Temperaturen sind insbesonders Reaktoren mit Kuppeln aus Spezialkeramik geeignet, wie sie beispielsweise für die Raumfahrt (space shuttle) entwickelt wurden, sowie Kuppeln aus entsprechend hitzebeständigen Metallegierungen oder anderen entsprechend hitzebeständigen Werkstoffen.

Die Kuppeln sind vorzugsweise konzentrische in einen Kegel auslaufende Kugelsegmente. Die innere Kuppel 1A ist drehbar, was zu einem gleichmässigen Verbrennungsvorgang ohne Katakombenbildung führt, und vorzugsweise auch relativ zur äusseren Kuppel 1B verschiebbar. Durch diese Verschiebung lässt sich die Grösse des Verbrennungs- resp. Vergasungsraumes zwischen den Kuppeln 1A und 1B und damit die Geschwindigkeit und der Materialdurchfluss regulieren. Die Verschiebung erfolgt insbesondere in vertikaler Richtung. Auch eine Verschiebung in anderer Richtung zur Aenderung der Brennraumgeometrie kann vorgesehen werden und kann vorteilhaft sein. Für die meisten Anwendungen hat sich ein Abstand der beiden Kuppeln von ca. 5 bis 10 cm am Boden als geeignet erwiesen.

Der Durchmesser der inneren Kuppel beträgt gewöhnlich mehr als 1 m, meist ca. 1,5 m. Mit einem derart ausgelegten Reaktor können pro Stunde ca. 1 Tonne Brennstoff vergast resp. verbrannt werden.

Die Einfüllöffnung für den Brennstoff ist vorzugsweise oben auf der Kuppel angeordnet. Ferner verfügt der Reaktor über mindestens je eine Gaszu- resp. Gasabführung, vorzugsweise über mehrere derselben, die auf verschiedenen Ebenen der äusseren Kuppel kreisförmig angeordnet und beliebig ansteuerbar sind. Die Gaszu-resp. Gasabführungen sind insbesondere auf die unteren 2/3 der äusseren Kuppel, bezogen auf deren innere Höhe, beschränkt.

Es hat sich gezeigt, dass die Vergasungs-resp. Verbrennungstemperatur stark erhöht werden kann, wenn dem Vergasungsprozess nicht nur Luft und/oder Sauerstoff zugeführt wird, sondern ein Wasserstoff-Sauerstoff-Gemisch und dass dadurch der Wirkungsgrad der Vergasung resp. Verbrennung wesentlich erhöht wird.

Ein solches Wasserstoff-Sauerstoff-Gemisch kann auf beliebige Weise hergestellt werden, z.B. elektrolytisch. In einer speziell kosten- und energiegünstigen Weise wird es unter Verwendung eines verbrennungsfördernden Mittels auf Lanthanidenbasis in sauerer Lösung erzeugt.

Die Erzeugung des Gasgemisches erfolgt in einer Katalysestation, vorzugsweise in einem Druckbehälter.

Für die Wasserstoff- und Sauerstofferzeugung wird das lanthanidenhaltige (mehrheitlich Lathan und Cer) verbrennungsfördernde Mittel - vorzugsweise in einem Druckbehälter - in eine Säure gegeben, in welcher die Lanthanidenverbindungen in Lösung gehen. Diese Lösung katalysiert die Dissoziation von Wasser zu Wasserstoff und Sauerstoff. Sobald der pH-Wert ansteigt, beginnen die Lanthaniden auszufallen, worauf die Reaktion stoppt. Die Fällung kann durch Ansäuern, entweder im Druckgefäss 6 selbst oder, bevorzugt, in einem separaten Behälter 7, wieder aufgelöst und abermals der Reaktion zugeführt werden. Der Zusatz geringer Mengen Mangan und/oder Zink und/oder Kupfer und/oder Nickel, meist 1- 10 % bezogen auf den Gehalt an Lanthaniden, kann positiv wirken.

Es hat sich gezeigt, dass die Reaktion bei Temperaturen von ca. 50-60°C ein Gemisch liefert, in dem das Volumen-Verhältnis Wasserstoff : Sauerstoff von etwa 1:2 bis etwa 1:5, bevorzugt etwa 1:3, beträgt.

Vorteilhafterweise werden die Reaktorgase aus dem Ofen in die Katalysestation geleitet, wo sie über einen Wärmeaustauscher die wässrige katalysatorhaltige Lösung erwärmen, was zu einer verbesserten Reaktivität des Katalysators führt und damit zur besseren Wasserstoff- und Sauerstofferzeugung.

Die Reaktorgase werden vorzugsweise zwischen Katalysestation 2 und Generator 3 analysiert und - falls notwendig - mit H₂ und O₂ gemischt, worauf die gewünschte Gasmischung dem Energiegenerator 3, beispielsweise dem Antriebsaggregat eines Stromgenerators, zugeführt und dort unter Stromerzeugung verbrannt wird. Gewöhnlich wird der grösste Teil der Verbrennungsabgase aus der Stromerzeugung, vorzugsweise mit H₂ und O₂ angereichert, wieder dem Reaktor zugeführt, ein geringerer Teil wird als Abgas - falls gewünscht nach Behandlung mit einem Rauchgaskatalysator - über ein Ueberdruckventil an die Umgebung abgegeben.

Die Katalysestation ist sinnvollerweise ferner mit dem Vergasungsreaktor verbunden, so dass durch Zuführung von Wasserstoff und Sauerstoff die Temperatur- und Gasverhältnisse im Reaktor auf optimale Vergasungsbedingungen eingestellt werden können.

Dank dem im wesentlichen geschlossenen Kreislauf und den hohen, erzielbaren Temperaturen enstehen, u.a dank Adsorptionsprozessen äusserst "saubere" Abgase.

Die Anlage ist sinnvollerweise an diversen Stellen mit Messapparaturen versehen, die die Gaszusammensetzung überprüfen und eine zu hohe Wasserstoffkonzentration verhindern. Aus Sicherheitsgründen sollte die Wasserstoffkonzentration in den Leitungen 4 Volumen-% nicht überschreiten.

Selbstverständlich kann eine Verbrennungs-resp. Vergasungsanlage auch mehrere Reaktoren umfassen, was insbesondere günstig ist, damit bei allfälligen Wartungsarbeiten der Betrieb weiterlaufen kann.

Mit der erfindungsgemässen Anlage können beispielsweise bei einer Reaktortemperatur von 1500°C, einer Rückführung von 90 % der Abgase und einer Wasserstoffkonzentration von ca. 4 % aus 1 Tonne Abfall bei nur ca. 2 % anfallender Schlacke und ca. 1 % Asche mind. ca. 1500 kWh Elektrizität gewonnen werden.

Für eine optimale Prozessführung ist ein Brennstoff mit kontinuierlichen, d.h. über lange Zeiträume konstanten, definierten Brenneigenschaften wünschenswert. Ein solcher Brennstoff kann mit dem ebenfalls Gegenstand dieser Erfindung bildenden Verfahren hergestellt werden.

Als Ausgangsstoffe für einen solchen Brennstoff kann eine breite Palette an Industrieabfällen und Hausmüll, insbesonders auch toxische Abfälle, eingesetzt werden. Speziell geeignet sind Industrieabfälle, beispielsweise Abfälle aus der chemischen und pharmazeutischen Industrie und Forschung, von Mineralölen resp. deren Produkten, von organischen Lösungsmitteln einschliesslich Farben, Lacken, Klebstoffen und Harzen, von Kunststoffen und Gummis und Textilien.

Solche Abfallstoffe lassen sich mit dem in der Folge näher beschriebenen erfindungsgemässen Verfahren in den geeigneten Brennstoff überführen.

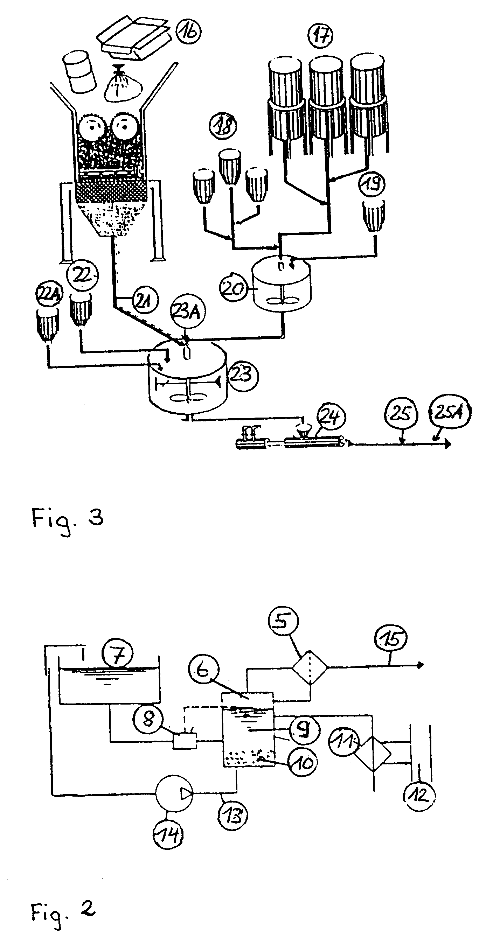

Das erfindungsgemässe Verfahren wird in der Folge anhand der Figur 3 näher beschrieben.

Die zu verarbeitenden Abfallstoffe werden analysiert und, falls nötig, entsprechend ihrer Analyse zwischengelagert. Für das Verfahren wichtige Analysenwerte sind der Halogenierungsgrad, der Kaloriengehalt sowie der pH-Wert. Die festen und die flüssigen Abfallstoffe werden gesondert vorbereitet:
Die festen organischen Abfallstoffe 16 werden zerkleinert. Die flüssigen organischen Abfallstoffe 17 werden mit Steuerchemikalien 18 vermischt. Bei den Steuerchemikalien handelt es sich um Säuren oder Laugen, die zur Einstellung des pH-Werts des Endprodukts benötigt werden und/oder um Reduktionsmittel und/oder Oxidationsmittel. Die Entstehung einer exothermen Reaktion bei Zugabe der Steuerchemikalien ist erwünscht. Nach intensivem Mischen der Flüssigkeiten in einem Mischtank 20 werden diese zusammen mit den zerkleinerten Feststoffen in einen Misch- und Reaktionstank 23 gegeben. Gleichzeitig mit den Abfallstoffen wird auch ein verfestigendes Mittel 22A in den Misch- und Reaktionstank 23 gegeben. Danach wird das noch feuchte Mischprodukt einer Hochdruckpumpe oder Presse zugeführt, wo bei ca. 20-120°C und einem Druck von 2-4, oft sogar bis 400 kg/cm² ein verfestigtes Produkt gebildet wird. Auf diese Weise kann ein unter üblichen Bedingungen stabiles Produkt erhalten werden, welches aus Auslaugtests als "nicht gefährlich" hervorgeht. Gleichzeitig findet eine weitgehende Entwässerung statt. Das Wasser wird teilweise verdampft und der in flüssiger Form anfallende Rest kann wieder, in einer früheren Stufe, in den Prozess zurückgeführt werden. Dieses Produkt kann anschliessend in einer beliebigen Form der Verbrennungs-resp. Vergasungsanlage zugeführt werden. Dies ist besonders gut möglich, wenn das verfestigende Mittel dem Produkt mindestens teilweise thermoplastische Eigenschaften verleiht.

Als Reaktionsmittel 18 geeignet sind beliebige Laugen und Säuren, bevorzugt jedoch Natronlauge und/oder Calziumchlorid und/oder Calziumsulfat sowie starke anorganische Säuren und/oder organische Säuren aus Abfallprodukten, sowie Reduktions- und/oder Oxidationsmittel, beispielsweise Halogene, Sauerstoff, Ozon sowie insbesondere Mischungen aus Eisen (II)- und Eisen (III)-Salzen, bevorzugt Oxiden in Mengen von 0,2 - 0,3 Volumen-%.

Als verfestigendes Mittel 22A kommen Monomere und allenfalls Oligomere sowie lösliche Silikate, beispielsweise Wasserglas, infrage, welche bei den Reaktionsbedingungen, üblicherweise 20-120°C und 2-400 kg/cm² Druck, zu einer Verfestigung des Abfallgemisches führen, ohne irgendwelche Eigenschaften zu entfalten, die den Verbrennungsvorgang behindern. Als speziell geeignet haben sich Acrylmonomere erwiesen, insbesondere Acrylsäureester, Polyacrylsäuren und/oder deren Salze (z.B. Acrylon® von BASF) sowie das bereits oben erwähnte Wasserglas.

Manchmal kann auch die Zugabe von Polyolen und Diisocyanaten wünschenswert sein, insbesondere zur Erhöhung der Lagersicherheit (Nicht-Auslaugbarkeit, Erhöhung der Flammtemperatur).

Es hat sich gezeigt, dass die gemeinsame Verarbeitung von Feststoff- und Flüssigabfällen günstig ist. Bei einem Verhältnis von 65-45 % Feststoff : 35-55 % Flüssigabfällen kann beispielsweise bereits mit sehr wenig Acrylsäureester, üblicherweise mit weniger als 3 %, ein verfestigtes Produkt erhalten werden. Bei geringem Gehalt an Feststoffabfällen muss natürlich mehr verfestigendes Mittel zudosiert werden.

Das Verfahren ist ausserdem so ausgelegt, dass auch im Reaktionstank eine Nachdosierung von Reaktionsmitteln stattfinden kann.

Ferner sieht das Verfahren die Möglichkeit vor, dem Reaktionsprodukt selbst ein verbrennungsförderndes Mittel 19 zuzusetzen. Dieses kann grundsätzlich an jeder Stelle vor dem Reaktionstank zugegeben werden, aus Gründen einer homogenen Verteilung aber bevorzugt in den Mischtank 20. Ein speziell geeignetes verbrennungsförderndes Mittel enthält Salze der Lanthaniden. Beispielsweise kann das verbrennungsfördernde Mittel direkt aus Monazitsand, einem Monazitsand, in dem die Lanthaniden angereichert worden sind (auf ca. 3 bis 30 %), oder einer Mischung reiner Lanthaniden-Salze, bevorzugt mit einem Silikat als Träger, bestehen oder diese enthalten. Selbstverständlich können auch andere lanthanidenhaltige Erze verwendet werden. Das verbrennungsfördernde Mittel wird gewöhnlich in Konzentrationen bis 20 % eingesetzt.

Die Zugabe eines solchen verbrennungsfördernden Mittels ermöglicht bei gleicher Brennstoffmenge eine kontrollierte Temperaturerhöhung von üblicherweise 100-500°C, so dass eine externe Katalysestation zwar trotzdem sehr wünschenswert aber nicht unbedingt notwendig ist.

Das erfindungsgemässe Verfahren ist ausserdem so ausgerichtet, dass direkt vor dem Reaktionstank 23 eine weitere Stufe eingeschaltet werden könnte, in der halogenhaltige Abfälle mit Gamma-Strahlen, wie sie beispielsweise von ⁶⁰Co emittiert werden, bestrahlt werden. Infolge der anwesenden Reaktionsmittel fallen die durch die Bestrahlung abgespaltenen Halogen-Atome in Form ihrer Halogenide an und werden homogen in den Brennstoff eingebaut.

Das Verfahren sieht ausserdem die Möglichkeit vor, direkt in den Reaktionstank weitere Stoffe 23 zuzugeben, welche bevorzugt Mangan, Zink, Nickel, Kupfer und/oder Silikate, bevorzugt Silikate dieser Metalle, enthalten. Der Zusatz von Kupfer und/oder Mangan und/oder Zink und/oder Nickel enthaltenden Silikaten hat sich einerseits als verbrennungsfördernd und andererseits als hervorragend zur Schlackenbildung geeignet erwiesen. Mangan, Zink, Nickel und allenfalls Kupfer können die Wirkung des Lanthankatalysators verstärken und werden üblicherweise in Mengen von ca. 10 % der Lanthaniden eingesetzt. Es hat sich zudem gezeigt, dass solche Metalle, insbesondere Kupfer, die Entfernung von Chlor aus chlorierten Kohlenwasserstoffen durch einen mindestens teilweise katalytischen Prozess fördern.

Mit dem erfindungsgemässen Verfahren lässt sich auch ein erfindungsgemässer, verbesserter Brennstoff herstellen, der Lanthaniden sowie Silikate von Mangan und/oder Zink und/oder Kupfer und/oder Nickel enthält.

Der gemäss dem erfindungsgemässen Verfahren hergestellte Brennstoff wird bevorzugt in Verbrennungs-resp. Vergasungsanlagen mit gekoppelter Energiegewinnung verwendet. Bei Verwendung eines chlorhaltigen Produkts ist es aus umwelttechnischen Gründen vorteilhaft, wenn die Verbrennungs- resp. Vergasungsanlage über eine Abgasreinigungsanlage verfügt, in der allfällig entstehende Salzsäure oder andere leicht flüchtige Stoffe aus der Abluft entfernt werden können. Bei einem pH-neutralen Produkt mit guter Schlackenbildung werden die Chloride allerdings mehrheitlich in der Schlacke gebunden.

## Patentansprüche

1. Vergasunganlage bestehend aus oder umfassend mindestens einen Verbrennungs- oder Vergasungsreaktor (1) mit einem Verbrennungs- resp. Vergasungsraum, mindestens einer Brennstoffzuführung, mindestens einer Gaszuführung und mindestens einer Gasabführung, dadurch gekennzeichnet, dass der Verbrennungs- resp. Vergasungsreaktor ein Doppelkuppelreaktor (1) ist, bei dem der Verbrennungs- resp. Vergasungsraum durch eine äussere Kuppel (1B) und eine drehbare, vorzugsweise konzentrische, innere Kuppel (1A) gebildet wird, wobei vorzugsweise mindestens eine der genannten Kuppeln (1A, 1B) in vertikaler Richtung verstellbar ist.

2. Vergasungsanlage gemäss Anspruch 1, dadurch gekennzeichnet, dass der Doppelkuppelreaktor (1) mit mindestens einer Zuführung für die direkte und/oder indirekte Einleitung eines Wasserstoff und Sauerstoff enthaltenden Gasgemisch versehen ist.

3. Vergasungsanlage gemäss Anspruch 1 oder 2, dadurch gekennzeichnet, dass der Doppelkuppelreaktor (1) direkt und/oder indirekt mit mindestens einer Katalysestation (2) zur Herstellung eines Wasserstoff/ Sauerstoff-Gasgemisches verbunden ist.

4. Vergasungsanlage gemäss einem der Ansprüche 1 bis 3, dadurch gekennzeichnet, dass die Gasableitung des Doppelkuppelreaktors (1) direkt oder indirekt mit einem Energiegenerator (3) verbunden ist.

5. Vergasungsanlage gemäss einem der Ansprüche 1 bis 4, dadurch gekennzeichnet, dass der Energie-Generator (3) eine Abgasleitung aufweist, die die mindestens teilweise Rückführung der Generatorabgase in den Reaktor ermöglicht.

6. Vergasungsanlage gemäss einem der Ansprüche 1 bis 5, dadurch gekennzeichnet, dass die Kuppeln (1A, 1B) des Doppelkuppelreaktors (1) aus einer hochhitzebeständigen Spezialkeramik und/oder -legierung bestehen.

7. Verfahren zur Herstellung eines festen Brennstoffs aus organischen Industrieabfällen und/oder Hausmüll mit einem definierten Heizwert, dadurch gekennzeichnet, dass die festen Abfallstoffe zerkleinert und mit flüssigen Abfallstoffen gemischt werden, wonach ein verfestigendes Mittel zugegeben und die Gesamtmischung unter Druck verfestigt wird.

8. Verfahren gemäss Anspruch 7, dadurch gekennzeichnet, dass die festen Abfallstoffe und die flüssigen Abfallstoffe in einem Verhältnis von 65-45 % Feststoff : 35-55 % Flüssigkeit eingesetzt werden.

9. Verfahren gemäss Anspruch 7 oder 8, dadurch gekennzeichnet, dass als verfestigendes Mittel Acrylsäureester und/oder lösliche Silikate und/oder Polyacrylsäuren und/oder deren Salze und/oder Polyole zusammen mit Diisocyanaten verwendet werden.

10. Verfahren gemäss einem der Ansprüche 7 bis 9, dadurch gekennzeichnet, dass den flüssigen Abfallstoffen vor Zumischung der festen Abfallstoffe als Reaktionsmittel Säuren und/oder Laugen und/oder Reduktions- und/ oder Oxidationsmittel zugegeben werden, welche gegebenenfalls auch Abfallstoffe sein können, und dass nach Vermischen der festen und flüssigen Abfallstoffe eine Nachdosierung der Reaktionsmittel möglich ist.

11. Verfahren gemäss einem der Ansprüche 7 bis 10, dadurch gekennzeichnet, dass den flüssigen Abfallstoffen vor Zumischung der festen Abfallstoffe Lanthaniden sowie gegebenenfalls gleichzeitig und/oder nach Zugabe der festen Abfallstoffe Mangan und/oder Zink und/oder Nickel und/oder Kupfer und/oder Silikate, insbesondere derselben, zugegeben werden.

12. Verfahren gemäss einem der Ansprüche 7 bis 11, dadurch gekennzeichnet, dass die Gesamtmischung bei einer Temperatur von 20 bis 120°C und einem Druck von 2 bis 400 kg/cm² verfestigt wird.
bei einer Temperatur von 20 bis 120°C und einem Druck von 2 bis 400 kg/cm² verfestigt wird.

13. Verfahren gemäss einem der Ansprüche 7 bis 12, dadurch gekennzeichnet, dass direkt vor dem Reaktionstank (23) eine Behandlung mit Gamma-Strahlen durchgeführt wird.

14. Verbrennungsförderndes Mittel, dadurch gekennzeichnet, dass es Lanthaniden in saurer, wässriger Lösung enthält.

15. Verbrennungsförderndes Mittel gemäss Anspruch 14, dadurch gekennzeichnet, dass die Lanthaniden Lanthan und/oder Cer sind oder diese enthalten.

16. Verbrennungsförderndes Mittel gemäss Anspruch 14 oder 15, dadurch gekennzeichnet, dass es ausserdem Mangan und/oder Zink und/oder Nickel und/oder Kupfer und/oder Silikate, insbesondere Silikate eines oder mehrerer der genannten Metalle, enthält.

17. Verwendung des verbrennungsfördernden Mittels nach einem der Ansprüche 14 bis 16 zur Herstellung eines Wasserstoff/Sauerstoff-Gemisches und/oder als Zusatz zu flüssigen Brennstoffen.

18. Fester Brennstoff aus organischen Industrieabfällen, der einen kontinuierlichen Heizwert aufweist und Lanthaniden enthält, dadurch gekennzeichnet, dass er zudem mangan- und/oder zink- und/oder nickel- und/oder kupferhaltige Silikate enthält.

19. Brennstoff gemäss Anspruch 18, dadurch gekennzeichnet, dass er einen Heizwert von über 1500 BTU, bevorzugt 4000-5500 BTU aufweist.

20. Brennstoff gemäss Anspruch 18 oder 19, dadurch gekennzeichnet, dass er einen neutralen pH-Wert aufweist.
